Europäisches Patentamt

**European Patent Office**

**Office européen des brevets**

(11) Publication number: **0 477 187 B1**

# EUROPEAN PATENT SPECIFICATION

(45) Date of publication of patent specification: **13.04.94**  (51) Int. Cl.⁵: **C10G 1/10**

(21) Application number: **90906829.8**

(22) Date of filing: **22.05.90**

(86) International application number:
**PCT/CA90/00165**

(87) International publication number:
**WO 90/14409 (29.11.90 90/27)**

(54) **RECOVERY OF COMMERCIALLY VALUABLE PRODUCTS FROM SCRAP TIRES.**

(30) Priority: **19.05.89 CA 600208**

(43) Date of publication of application:
**01.04.92 Bulletin  92/14**

(45) Publication of the grant of the patent:
**13.04.94 Bulletin  94/15**

(84) Designated Contracting States:
**AT BE CH DE DK ES FR GB IT LI LU NL SE**

(56) References cited:
**FR-A- 2 192 163**
**GB-A- 1 481 353**
**US-A- 4 740 270**

(73) Proprietor: **UNIVERSITE LAVAL**
**Cité Universitaire**
**Ouebec, Ouebec G1K 7P4(CA)**

(72) Inventor: **ROY, Christian**
**1560, avenue du Parc Beauvoir**
**Sillery, Ouebec G1T 2M4(CA)**

(74) Representative: **Casalonga, Axel et al**
**BUREAU D.A. CASALONGA - JOSSE**
**Morassistrasse 8**
**D-80469 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 477 187 B1

**Description**

The present invention relates to improvements in the field of tire recycling. More particularly, the invention is directed to the recovery of commercially valuable products from used rubber tires.

Tire recycling has become a necessity because of the accumulation of large quantities of scrap tires which represents a major environmental problem. Each year, about 24 million used rubber tires are disposed of in Canada and about 250 million in the United States. While some of these tires are recapped or ground up for special uses, most are simply dumped in rural farm land or in landfill sights. When buried in landfills they eventually float to the surface, and when piled the non-biodegradable rubber will cause serious damage if ignited by lightning or vandals.

On the other hand, used rubber tires represent a source of energy and raw products for the production of rubber parts. By thermal decomposition of rubber, it is possible to recover to a certain extent the initial ingredients which constitute a tire. To this end, Applicant has already proposed in US Patent N° 4,740,270 a process for the treatment of used rubber tires by vacuum pyrolysis in a reactor to produce liquid and gaseous hydrocarbons and a solid carbonaceous material. According to this process, the pyrolysis of the tires is carried out at a temperature in the range of about 360°C to about 415°C, under a subatmospheric pressure of less than about 35 mm Hg and such that gases and vapors produced in the reactor have a residence time of the order of a few seconds. As a result, pyrolytic oils are obtained in substantially maximum yield. Typically, about 60 weight % hydrocarbon oils, about 38 weight % solid carbonaceous material and about 2 weight % gaseous hydrocarbons can be produced by such a process. As indicated in Applicant's aforementioned patent, the hydrocarbon oils produced have a calorific value of about 10,200 kcal kg$^{-1}$ and are thus suitable for use as heating fuel.

The solid carbonaceous material which is obtained as a by-product in the vacuum pyrolysis of used rubber tires contains a significant amount of carbon blacks. Such carbon blacks, however, have a low specific surface area which renders them unsuitable for most applications where high-grade carbon blacks are required.

The iodine adsorption number of a carbon black is a direct indication of its specific surface area. This particular property is considered to be one of the most important means by which a carbon black can be evaluated. In the case of carbon blacks obtained by vacuum pyrolysis of used rubber tires at temperatures in the range of 260-415°C under an absolute pressure of less than 5 kPa, the iodine adsorption number is generally below 75 mg/g.

DISCLOSURE OF INVENTION

It is therefore an object of the invention to recover commercially valuable products from used rubber tires.

Applicant has - now found quite unexpectedly that by increasing the reactor bed temperature from 415°C to a temperature in the range of 490-510°C, while maintaining an absolute pressure of less than about 5 kPa, the iodine adsorption number of the carbon black produced can be significantly increased, to about 130-150 mg/g. However, upon increasing the temperature above 510°C, the residual carbonaceous solids are subjected to a series of complex changes which result in a drastic decrease of the iodine index.

According to the invention, there is thus provided a process for producing carbon black by vacuum pyrolysis of used rubber tires, which comprises pyrolysing used rubber tire material at a temperature in the range of 490°C to 510°C under an absolute pressure of less than about 5 kPa, and recovering a solid carbonaceous material containing carbon black having an iodine adsorption number of about 130 to about 150 mg/g.

In a preferred embodiment, the vacuum pyrolysis is carried out at a temperature of about 500°C under an absolute pressure of about 0.3 kPa so as to produce a carbon black having an iodine adsorption number of about 150 mg/g.

The general properties of the carbon black produced in accordance with the invention are summarized in the following Table 1:

TABLE 1

| Iodine Index (mg/g) | 130 - 150 |
| DBP adsorption (ml/100g) | 80 - 100 |
| Heat loss at 105°C (%) | 0.3 - 1.4 |
| Tint strength | 55 - 63 |
| Ash (%) wt. above | 10 - 17 |
| Volatile Matter (%) wt. | 2 - 5 |
| S (%) wt. | 2.5 - 3.0 |

The tire-derived carbon black of the invention can be used as filler for rubber goods such as sidewalls for vehicle tires, footwears, rubber sheets, conveyer belts, dock fenders, bicycle tires, etc. Another application of such a carbon black is as a raw material for activated carbon.

BRIEF DESCRIPTION OF DRAWINGS

Further features and advantages of the invention will become more readily apparent from the following non-limiting example and the accompanying drawings, in which:

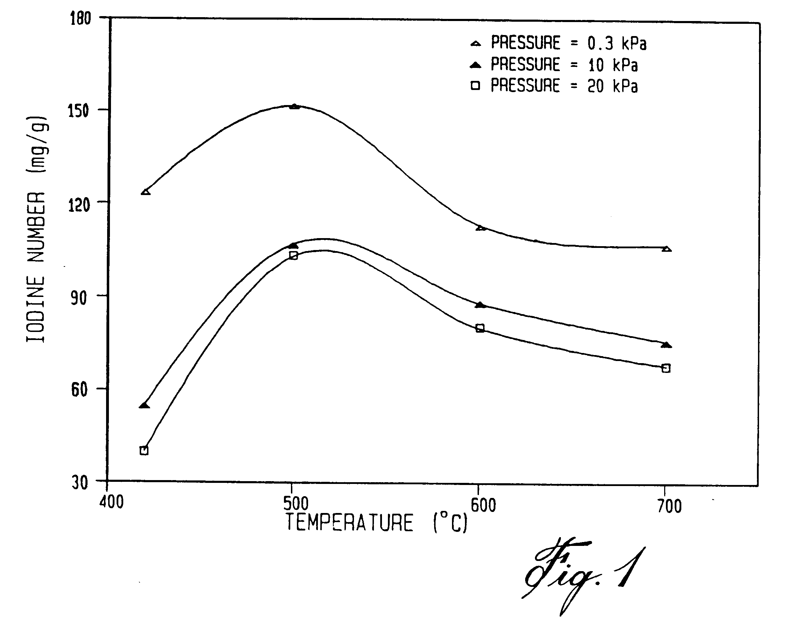

Fig. 1 is a plot of the iodine adsorption number of carbon blacks produced by vacuum pyrolysis of used rubber tires, as a function of temperature for various pressures.

EXAMPLE

Used rubber tires in the form of cuttings were treated by vacuum pyrolysis in accordance with Example 5 of US Patent N° 4,740,270, with the exception that the reactor bed temperature was increased from 420° to 700°C and the pressure conditions were varied. The iodine adsorption numbers of the carbon blacks produced at varying temperatures and pressures were measured. The results of iodine adsorption number measurements as a function of the operating conditions used as reported in the following Table 2:

TABLE 2

| EXPERIMENT N° | TEMPERATURE (0°C) | PRESSURE (kPa) | IODINE ADSORPTION NUMBER $(mg/g^{-1})$ |
|---|---|---|---|
| 1 | 350 | 0.3 | --- |
| 2 | 420 | " | 124 |
| 3 | 500 | " | 151 |
| 4 | 600 | " | 113 |
| 5 | 700 | " | 105 |
| 6 | 700 | " | 107 |
| 7 | 420 | 10 | 59 |
| 8 | 550 | " | 110 |
| 9 | 550 | " | 105 |
| 10 | 700 | " | 62 |
| 11 | 420 | 20 | 55 |
| 12 | 700 | " | 62 |
| 13 | 420 | 10 | 55 |
| 14 | 500 | " | 107 |
| 15 | 600 | " | 80 |
| 16 | 700 | " | 76 |
| 17 | 420 | 20 | 40 |
| 18 | 500 | " | 103 |
| 19 | 600 | " | 88 |
| 20 | 700 | " | 68 |

The variation of the iodine adsorption number as a function of the reactor bed temperature, for various reactor pressures, is plotted in Fig. 1. As may be seen, the curves in Fig. 1 indicate a strong dependency of the specific surface area as a function of pyrolysis temperature. For all operating pressures, the curves look similar with a bell shape centered around 500 °C.

The best quality carbon black is produced at a final bed temperature of 500 °C and an operating pressure of 0.3 kPa absolute.

The variation of the specific surface area with temperature can be explained as follows. Upon increasing the reactor bed temperature from 420 to 500 °C, the excess rubber organic ingredients from the pores and the surface are pulled out and removed. This results, at the beginning, in a sharp increase in the iodine adsorption number. However, upon increasing the temperature above 500 °C, the residual carbonaceous solids are subjected to a series of complex changes. These changes are the main sources for the drastic decrease in iodine index.

The changes in residual solid properties take place by a series of consecutive and parallel reactions, involving both the solid residue and evolved hydrocarbons. One of these modifications involves the deposition of pyrolytic carbon in the pores and on the surface of the carbon black. Other modifications involve the elimination and screening of the surface functional groups. In the former case, pyrolytic carbon is formed through the pyrolysis of generated hydrocarbon vapors and gases. However, in the latter case, the surface functional groups are screened by pyrolytic carbon deposition, and eliminated by the degassing of carbon-oxygen and carbon-hydrogen complexes.

Some of the main characteristics of the carbon black produced by vacuum pyrolysis of used rubber tires at 500 °C and 0.3 kPa are summarized in the following Table 3, and compared with the properties of two commercially available carbon black, N-234 and N-330:

## TABLE 3

| PHYSICOCHEMICAL PROPERTIES | N-234 | N-330 | CARBON BLACK PRO-DUCED BY PYROLYSIS AT 500°C and 0.3 kPa |
|---|---|---|---|
| Surface Area | | | |
| Iodine index $(mg\ g^{-1})$ | 112.7 | 80.5 | 151.5 |
| Proximate Analysis | | | |
| Volatile Content (wt. %) | 4.2 | 3.3 | 2.8 |
| Loss at 105°C (wt. %) | 3.2 | 2.5 | 0.2 |
| Fixed Carbon (wt. %) | 95.2 | 96.4 | 85.8 |
| Ash Content (wt. %) | 0.6 | 0.3 | 11.4 |
| Wettability | Hydrophilic | Hydrophilic | Hydrophobic |
| Elemental Analysis | | | |
| Carbon (wt.%) | 94.81 | 96.00 | 85.17 |
| Hydrogen (wt. %) | 0.84 | 0.66 | 0.74 |
| Nitrogen (wt. %) | 0.77 | 0.60 | 0.76 |
| Oxygen (wt. %) | 2.98 | 1.98 | 1.95 |
| pH | 4.2 | 7.3 | 8.7 |

As may be seen from Table 3, the carbon black obtained by vacuum pyrolysis of used rubber tires has an iodine adsorption number superior to those of the standard reference blacks N-234 and N-330. The tire-derived carbon black is basic as evidenced by the pH of 8.7, whereas the commercial black N-234 is acidic and N-330 is almost neutral.

However, the significant difference between the tire-derived carbon black and the commercial carbon blacks is their high inorganic material or ash content. The inorganic content of tire-derived blacks is generally higher than 10%. wt.

In all cases, carbon black produced by rubber pyrolysis is distinctly different from commercial blacks. This difference would originate mainly from the interactions of the solid residue with the products of hydrocarbon pyrolysis reactions. The deviation from the parent properties would originate partly from the surface thermal treatment of carbon black during pyrolysis process.

## Claims

1. A process for producing carbon black by vacuum pyrolysis of used rubber tires, which comprises pyrolysing used rubber tire material at a temperature in the range of 490°C to 510°C under an absolute pressure of less than about 5 kPa, and recovering a solid carbonaceous material containing carbon black having an iodine adsorption number of about 130 to about 150 mg/g.

2. A process according to claim 1, wherein said pyrolysis is carried out at a temperature of about 500°C.

3. A process according to claim 1, wherein said pyrolysis is carried out at a temperature of about 500°C under an absolute pressure of about 0.3 kPa whereby to obtain a carbon black having an iodine adsorption number of about 150 mg/g.

4. A carbon black produced by vacuum pyrolysis of used rubber tires at a temperature in the range of 490°C to 510°C under an absolute pressure of less than about 5 kPa, and having an iodine adsorption number of about 130 to about 150 mg/g, a DBP adsorption of about 80 to about 100 ml/100g and a tint strength number of about 55 to about 63.

5. A carbon black according to claim 4, produced by vacuum pyrolysis of used rubber tires at a temperature of about 500°C under an absolute pressure of about 0.3 kPa, and having an iodine adsorption number of about 150 mg/g.

6. A carbon black as claimed in claim 4 or 5, having a hydrophobic character and an ash content of more than 10 to 17 weight %.

## Patentansprüche

1. Verfahren zur Herstellung von Ruß durch Vakuumpyrolyse von gebrauchten Gummireifen, welches die Pyrolyse von Gebrauchtreifenmaterial bei einer Temperatur in dem Bereich von 490° C bis 510° C unter einem Absolutdruck von weniger als etwa 5 kPa und die Gewinnung eines festen, Ruß enthaltenden Kohlenstoffmaterials, das eine Jodadsorptionszahl von etwa 130 bis etwa 150 mg/g hat, umfaßt.

2. Verfahren nach Anspruch 1, worin diese Pyrolyse bei einer Temperatur von etwa 500° C durchgeführt wird.

3. Verfahren nach Anspruch 1, worin diese Pyrolyse bei einer Temperatur von etwa 500° C unter einem Absolutdruck von etwa 0,3 kPa durchgeführt wird, um einen Ruß mit einer Jodzahl von etwa 150 mg/g zu erhalten.

4. Ruß, hergestellt durch Vakuumpyrolyse von gebrauchten Gummireifen bei einer Temperatur in dem Bereich von 490° C bis 510° C unter einem Absolutdruck von weniger als etwa 5 kPa, der eine Jodadsorptionszahl von etwa 130 bis etwa 150 mg/g, eine DBP-Adsorption von etwa 80 bis etwa 100 ml/100g und eine Farbkraftzahl von etwa 55 bis etwa 63 hat.

5. Ruß nach Anspruch 4, hergestellt durch Vakuumpyrolyse von gebrauchten Gummireifen bei einer Temperatur von etwa 500° C unter einem Absolutdruck von etwa 0,3 kPa, der eine Jodadsorptionszahl von etwa 150 mg/g hat.

6. Ruß nach Anspruch 4 oder 5 mit hydrophobem Charakter und einem Aschegehalt von mehr als 10 bis 17 Gew.-%.

**Revendications**

1. Procédé de fabrication de noir de carbone par pyrolyse sous vide de pneumatiques en caoutchouc usés, qui comprend la pyrolyse d'un matériau de pneumatiques en caoutchouc usés à une température comprise entre 490°C et 510°C sous une pression absolue inférieure à environ 5 kPa, et la récupération d'une matière carbonée solide qui contient du noir de carbone ayant un indice d'adsorption d'iode d'environ 130 à environ 150 mg/g.

2. Procédé selon la revendication 1, dans lequel ladite pyrolyse est effectuée à une température d'environ 500°C.

3. Procédé selon la revendication 1 dans lequel ladite pyrolyse est effectuée à une température d'environ 500°C sous une pression absolue d'environ 0,3 kPa pour obtenir de ce fait un noir de carbone ayant un indice d'adsorption d'iode d'environ 150 mg/g.

4. Noir de carbone produit par pyrolyse sous vide de pneumatiques en caoutchouc usés, à une température comprise entre 490°C et 510°C sous une pression absolue inférieure à environ 5 kPa, et ayant un indice d'adsorption d'iode d'environ 130 à environ 150 mg/g, un indice d'adsorption de DBP d'environ 80 à 100 ml/100g et un indice de force de coloration d'environ 55 à environ 63.

5. Noir de carbone selon la revendication 4, produit par pyrolyse sous vide de pneumatiques en caoutchouc usés, à une température d'environ 500°C sous une pression absolue d'environ 0,3kPa, et ayant un indice d'adsorption d'iode d'environ 150 mg/g.

6. Noir de carbone selon la revendication 4 ou 5, ayant un caractère hydrophobe et une teneur en cendres plus élevée que 10 à 17% en poids.

*Fig. 1*

EP 0 477 187 B1